# EUROPEAN PATENT APPLICATION

(11) **EP 1 453 176 A2**
(43) Date of publication of application: **01.09.2004**
(21) Application number: 04002430.9
(22) Date of filing: 04.02.2004
(51) Int. Cl.: H02J 7/00, H02J 7/02, H02J 7/34, H01M 10/44, H01G 9/00

(54) **Charger for mobile phone and operation method for the same and charging apparatus for mobile phone and charging method for the same**

(30) Priority: 06.02.2003 JP 2003029345; 13.02.2003 JP 2003035065
(71) Applicant: Terakawa, Soji, Muko-shi, Kyoto (JP); Ishizu, Masao, Nara-shi, Nara (JP)
(72) Inventor: Ishizu, Masao, Nara-shi, Nara (JP)
(74) Representative: HOFFMANN - EITLE

(57) **Abstract**

A charger for mobile phone provided with a power input portion (12), a switching power source portion (1) to which electric power is supplied by the power input portion (12), a control portion (2) having a micro-computer logic circuit (25) and supplied with electric energy by the switching power source portion (1), a capacitor portion (3) having plural electric double-layer capacitors (4) to accumulate the electric energy supplied by the control portion (2), a feedback circuit (5) transmitting charging state of the electric double-layer capacitors (4) to the control portion (2), and an output portion (6) to supply the electric energy accumulated in the electric double-layer capacitors (4) to a battery (8) of a mobile phone (10) with constant voltage.

## Description

This invention relates to a charger for mobile phone and an operation method for the same, and, a charging apparatus for mobile phone and a charging method for the same.

Conventionally, chargers for mobile phone as in ① to ⑤ below, each of which has problems, are known.
① As a charger for mobile phone, a charger is connected to a commercial power source and a battery of a mobile phone is connected to the charger to charge for a long period of time. The mobile phone is restricted to the installation site of the charger.
② Although a charger with dry batteries to connect the mobile phone through a controller is known, it causes high cost because the dry batteries have to be replaced when exhausted.
③ Although an auxiliary portable battery is prepared in some cases, it is expensive and little-demanded for short life cycle of mobile phones.
④ A charger in which electric double-layer capacitors are used as power source instead of secondary batteries to charge plural cordless devices (for example, refer to Japanese Patent Publication No. 8-31339). However, it is not appropriate for carrying the mobile phone.
⑤ A technic, in which an electric double-layer capacitor of a cordless device is charged by a charging capacitor parallel-connected between a DC power source to charge the charging capacitor and the electric double-layer capacitor, is known (for example, refer to claim 1 of the above Japanese Patent Publication No. 8-31339). However, this is only to transfer electric energy accumulated in the charging capacitor to the electric double-layer capacitor, and inappropriate for charging a battery of the mobile phone.

As described above, any one of the chargers (dischargers) of ① to ⑤ is not appropriate for a mobile phone. Especially, the conventional charger for mobile phone (refer to the above ① has a great disadvantage that the mobile phone is restricted for a long time until the battery is fully charged because the commercial power is converted to DC voltage for the battery, and the mobile phone is connected to the charger to charge for a certain period of time.

And, when the battery of the mobile phone is exhausted on a trip, an appropriate charging system (apparatus or facility) to quickly and easily charge the mobile phone does not exist and this causes inconvenience. (Although some stationary chargers to charge for 60 to 90 minutes are used, it is also inconvenient because the mobile phone can not be used for 60 to 90 minutes.)

It is therefore an object of the present invention to provide a quite new operation method and apparatus in which electric energy from a commercial power source or a car battery proper for battery capacity of a mobile phone is accumulated in a charger within a few minutes, then, the charger is detached from the commercial power source or the car battery to charge the battery of the mobile phone for sufficient time while being carried.

It is another object of the present invention to provide a quite new operation method in which a stationary large public charger is placed in a convenience store, etc., small and portable chargers are successively connected to rapidly charge, then, each charger is detached from the public charger to charge the battery of the mobile phone for sufficient time while being carried.

These objects are solved according to the present invention bycharger for mobile phone and an operation method for the same, and, a charging apparatus for mobile phone and a charging method for the same including the features of claim 1, 8, 9, or 15. Furthermore detailed embodiments are described in dependent claims 2, 3, 4, 5, 6, 7, 10, 11, 12, 13, and 14.

The present invention will be described with reference to the accompanying drawings, in which:
Figure 1 is a perspective view showing an embodiment of a charger for mobile phone of the present invention;
Figure 2 is an explanatory circuit diagram of basic construction;
Figure 3 is a circuit diagram of an electric double-layer capacitor;
Figure 4 is a graph showing a relationship of time to current and voltage charged to the electric double-layer capacitor;
Figure 5 is a perspective view showing another embodiment of the present invention;
Figure 6 is an explanatory perspective view of a principal portion;
Figure 7 is a perspective view of a principal portion;
Figure 8 is an explanatory circuit diagram of basic construction;
Figure 9 is a circuit diagram showing an example of a power source portion;
Figure 10 is a circuit diagram showing another example of the power source portion; and
Figure 11 is a circuit diagram showing further example of the power source portion.

Preferred embodiments of the present invention will now be described with reference to the accompanying drawings.

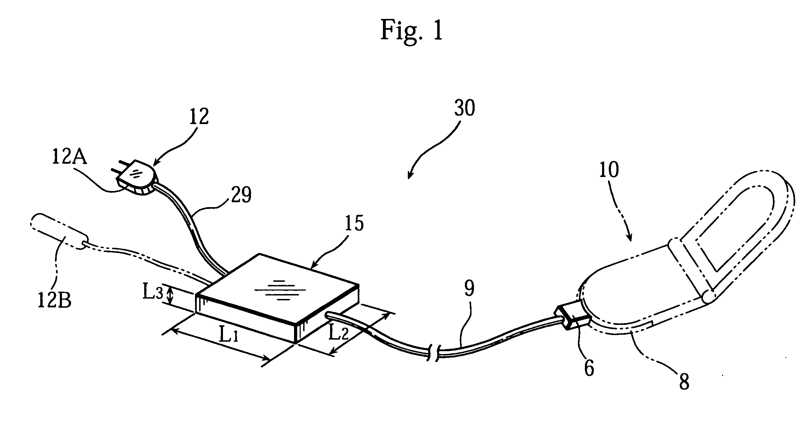

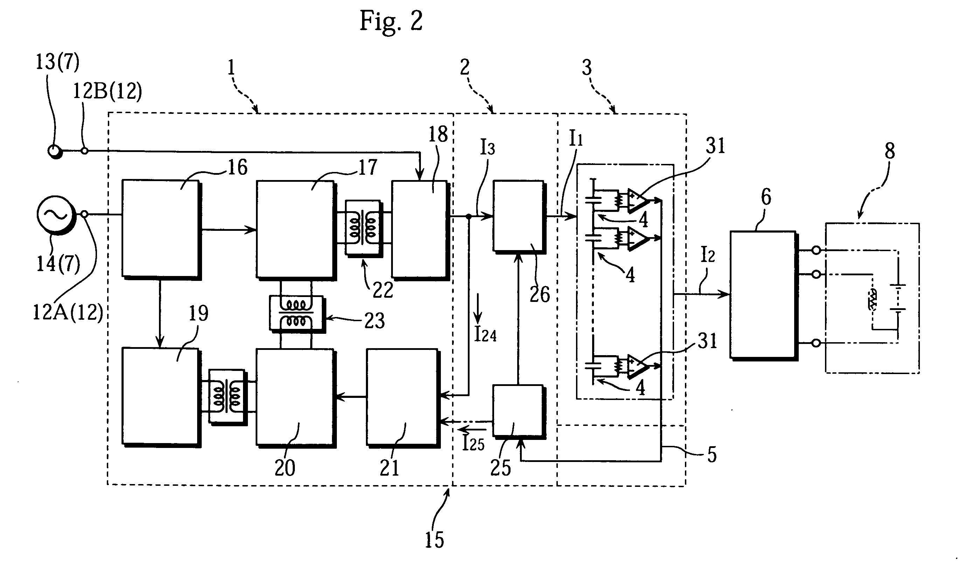

Figure 1 is a perspective view showing an embodiment of a charger for mobile phone of the present invention, and Figure 2 is a basic explanatory circuit diagram. In Figure 1 and Figure 2, this charger 30 is provided with a power input portion 12, a charging case 15 connected to the power input portion 12 through a cord 29, and an output portion 6 connected to the charging case 15 through a cord 9. The power input portion 12 is provided with a plug 12A for a commercial power source 14 and (when desired) a plug 12B for a car battery 13. Preferably, two plugs 12A and 12B may be provided to connect the power input portion 12 alternatively to the commercial power source 14 or the car battery 13.

Principal parts of the present invention are included in the charging case 15. That is to say, the charging case 15 is provided with a switching power source portion 1 supplied with electric power by the power input portion 12, a control portion 2 having a micro-computer logic circuit 25 and supplied with electric energy by the switching power source portion 1, a capacitor portion 3 having plural electric double-layer capacitors (condensers) 4 to accumulate the electric energy supplied by the control portion 2, and a feedback circuit 5 to transmit charging state of the electric double-layer capacitors 4 to the control portion 2. And, the plural electric double-layer capacitors 4 are serially connected. The power input portion 12 is (detachably) connected to a power source 7 such as the commercial power source 14 and the car battery 13, and the output portion 6 is (detachably) connected to a battery 8 of a mobile phone 10.

Electric current I₁ running from the control portion 2 to the electric double-layer capacitors 4 is controlled by the control portion 2 to be much larger than electric current I₂ running from the electric double-layer capacitors 4 to the output portion 6, namely, l₁ >> l₂. For example, l₁ and l₂ are set to be 5 ≦ l₁ / l₂ ≦ 50. More preferably, 10 ≦ l₁ / l₂ ≦ 25. And, charge and supplied voltage of the electric double-layer capacitors 4 are controlled by the control portion 2 as to correspond to charging state of the electric double-layer capacitors 4 transmitted by the feedback circuit. The output portion 6 has a constant current (DC - DC) converter to supply (output) constant current to the battery 8. It is also preferable to include the constant current (DC - DC) converter within the charging case 15.

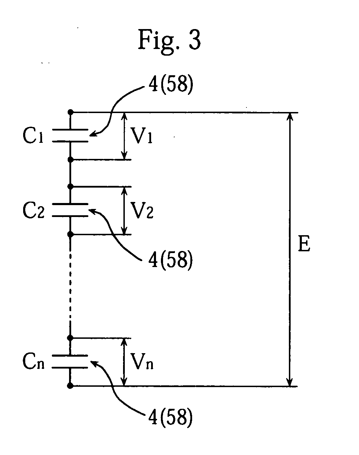

A mark 31 represents a detecting portion connected to each of the electric double-layer capacitors 4 to detect terminal voltage V₁, V₂, V₃, etc. Each voltage V₁, V₂ V₃, etc. detected by the detecting portion 31 is sent to the control portion 2 through the feedback circuit 5. Total voltage value is calculated by a program control of the micro-computer logic circuit 25 of the control portion 2 as each of terminal voltage V₁, V₂, V₃, etc. is within an operational range (even if the electric double-layer capacitors 4 are different one another in electrostatic capacity and internal resistance). The calculated total voltage is supplied to the serially-connected plural electric double-layer capacitors 4 as supplied voltage E (refer to Figure 3). A mark 26 represents a current-voltage control portion for this process.

And, the switching power source portion 1 is provided with a rectifier circuit 16 supplied with electric power by the commercial power source 14, a switching portion 17 and an auxiliary power source 19 supplied with electric energy by the rectifier circuit 16, and a high-frequency rectifier circuit 18 supplied with the electric energy by the switching portion 17 through an output transformer 22. Further, the switching power source portion 1 is provided with a constant voltage control portion 21 and a PWM control portion 20 to detect and make constant the voltage of the electric energy supplied to the control portion 2 by the high-frequency rectifier circuit 18, and a driving transformer 23 for transmitting control signals of the PWM control portion 20 to the switching portion 17. And, the high-frequency rectifier circuit 18 is connected to the car battery 13. The charging case 15 is, for example, formed to be a rectangular parallelepiped having a longitudinal side L₁ (10 cm to 15cm), a lateral side L₂ (8cm to 10cm), and a thickness L₃ (0.5cm to 3 cm) as to have a magnitude (size) easily held in a handbag, a pocket, or a bag and carried.

Figure 3 is a circuit diagram of the serially-connected plural electric double-layer capacitors 4 having electrostatic capacity C₁, C₂, ..., Cₙ , and V₁, V₂, ..., Vₙ indicate terminal voltage as described above. E is the above-mentioned supplied voltage of the capacitor portion 3 which corresponds to V₁ + V₂ + V₃ + ... + Vₙ (namely, the total voltage).

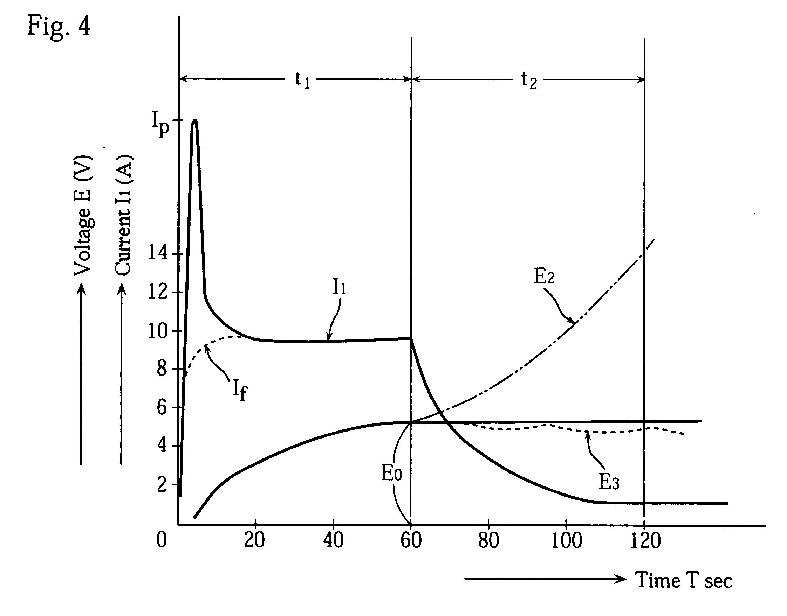

Figure 4 is a graph in which time T (sec.) is indicated on an axis of abscissa, and current l₁ (A) and the above-mentioned supplied voltage E (V) are indicated on an axis of ordinate. t₁ is a period of constant current, t₂ is a period of constant voltage, and lₚ indicates a value of intrusion current when the current begins running through the capacitor portion 3.

Changes in the charging current l₁ and the supplied (charging) voltage E to the electric double-layer capacitors 4 are described. Within the period t₁ of constant current (30 to 120 seconds, for example), the current l₁ becomes the intrusion current Iₚ showing a peak in a moment of the beginning of charge, then, the current l₁ becomes constant current (of 8A to 12A). In the period t₁ of constant current, the voltage E gradually rises and value of the total charging voltage (supplied voltage), (preliminarily) input for the above-mentioned program control, reaches E₀. Necessity of controlling the intrusion current lₚ is (generally) low because the voltage E is very low when the intrusion current Iₚ is running.

However, after the supplied voltage E reached a predetermined value E₀, the current I without control may rapidly increase as E₂ curve shown with a two-dot broken line and go over the operational voltage of the electric double-layer capacitors 4. So the control portion 2 (including the current-voltage control portion 26) controls as the current l₁ is gradually decreased and the supplied (charging) voltage E is constant value E₀ in the period t₂ of constant voltage. In this case, as shown with the broken line E₂, inconstant change in the voltage E₃ is also controlled by the control portion 2. In a terminal moment of the period t₂ of constant voltage (100 to 200 seconds from the start, for example), the current I₁ becomes a low value such as 1(A). The voltage E₀ is, for example, within a range of 4 to 8 (V).

Next, the above-mentioned constant current l₁ in the period t₁ of constant current is described. The switching power source portion 1 is controlled by the program control of the micro-computer logic circuit 25 of the control portion 2 as each terminal voltage V₁ , V₂, ..., Vₙ of the plural electric double-layer capacitors 4 is detected and transmitted to the control portion 2 by the feedback circuit 5 to supply the current l₁ of the maximum power of the switching power source portion 1. In other words, as a means of boosting charge of the serially-connected electric double-layer capacitors 4 of large capacity, the control in the period t₁ of constant current shown in Figure 4 is conducted as that terminal voltage V₁, V₂, ..., Vₙ of the electric double-layer capacitors 4 and the charging current l₁ are detected, and the current l₁ of the maximum power of the switching power source portion 1 and the voltage E(E₀) to supply the current l₁ are controlled by the program of the micro-computer logic circuit 25.

When a soft starter is mounted on the control portion 2, the intrusion current lₚ may be controlled as the early current l₁, is regulated under approximately constant current l_{f} not to be over the resistance of the electric double-layer capacitors 4 for safer charging.

As described above, the exhausted battery 8 of the mobile phone 10 can be charged and the mobile phone 10 can be used in connected state when the user is out because the charger 30 for mobile phone of the present invention has a size can be held in bags and pockets, and carried with the charged electric double-layer capacitors 4.

And, when the both of the plug 12A and the plug 12B are provided, charging site is not restricted to the installation site of the commercial power source 14, and the charger 30 can be charged in outing by a car because the charger 30 can be charged with not only the commercial power source 14, but the car battery 13 as the power source 7.

The charger 30 can be charged rapidly (within a range of 30 seconds to 2 minutes) to reduce waiting time in hasty preparation for outing because the current l₁ running toward the electric double-layer capacitors 4 is much larger than the current l₂ running toward the battery 8 of the mobile phone 10 through the output portion 6. When this compact charger 30 is taken around (carried) with the mobile phone 10 in bags and pockets, the battery 8 can be charged when needed immediately in any place with connection through the cord 9, further, the mobile phone 10 can be used for a long time (when charged while the mobile phone 10 is used in a staying place) because discharge toward the battery 8 of the mobile phone 10 takes a long time.

According to the operation method of the charger for mobile phone relating to the present invention, the power input portion 12 of the charger 30, provided with the capacitor portion 3 having plural electric double-layer capacitors 4, the power input portion 12, and the output portion 6, is connected to the commercial power source 14 or the car battery 13 to conduct boosting charge of the capacitor portion 3, then, the power input portion 12 is separated to carry the charger 30, the output portion 6 of the carried charger 30 is connected to the battery 8 of the mobile phone 10 to charge with a period of time 5 to 50 times longer than the time of the boosting charge. After the boosting charge at home or in the car, the battery of the mobile phone 10 can be charged slowly.

The charger 30 can be effectively used without damaging the electric double-layer capacitors 4 because the terminal voltages V₁, V₂, ..., Vₙ of the serially-connected electric double-layer capacitors 4 are detected by the detecting portion 31 to control the total voltage E within the preliminarily input voltage (operational voltage) E₀.

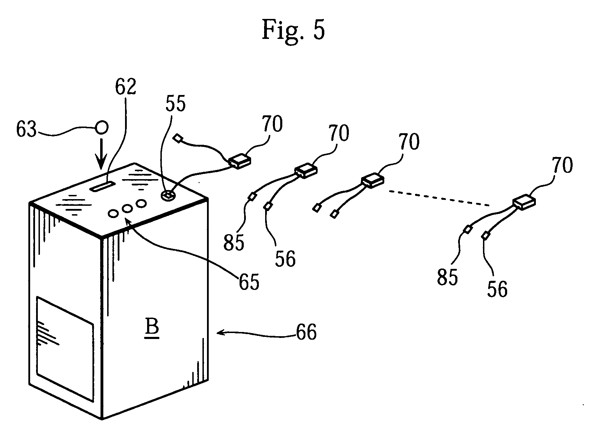

Next, another embodiment shown in Figure 5 through Figure 8 is described. This charging apparatus for mobile phone is provided with a stationary public charger 66 of box-shape and plural (small) portable chargers 70 held in handbags, baggage, pockets, etc.

The box-shaped public charger 66 is placed in convenience stores, hotels, stations (for transportation such as trains and buses), and public spaces, and having a coin slot 62 and a jack (terminal) 55 to connect the portable charger 70.

In Figures 5 through 8, the stationary public charger 66 is connected to a commercial power source 14 through an input plug (connection terminal portion) 69, and AC 100V is rectified and decreased to, for example, DC 12V, and supplied to a battery 53 through a control portion 52 to be accumulated. The battery 53 can be sufficiently large for the stationary public charger 66.

A mark 54 represents a constant power control portion connected to an output side of the battery 53, and an output side of the constant power control portion 54 is connected to the above-mentioned terminal (jack) 55.

A sensor switch 64 is disposed in a box B of the stationary public charger 66 to detect feeding of a coin 63 to the coin slot 62. Coin detection signal l₆₄ from the sensor switch 64 is sent to the constant power control portion 54.

And, the constant power control portion 54 controls as electric energy is supplied to a capacitor portion 57 of the portable charger 70 in connected state.

That is to say, the stationary public charger 66 has an on-off control means 80 to control as to supply the capacitor portion 57 of the portable charger 70 in connected state with the electric energy by detection work of the sensor switch 64. The on-off control means 80 is composed of the sensor switch 64, wiring (to transmit the detection signal l₆₄), and the constant power control portion 54.

In short, the stationary public charger 66 is provided with the power source portion 51 to rectify and decrease the AC power from the commercial power source 14, the battery 53 to accumulate the DC power from the power source portion 51, the control portion 52 to regulate charging amount to the battery 53, the constant power control portion 54 to control as to supply constant power to the portable charger 70 in the connected state, the terminal (jack) 55 to which the portable charger 70 is detachably connected, and the sensor switch 64. Further, the public charger 66 has the on-off control means 80 to control as that the electric energy is supplied to the portable charger 70 when the sensor switch 64 works by detection of the feeding of the coin 63.

In Figure 5, a mark 65 represents a charging-state indicator such as an LED lamp, a liquid-crystal indicator, etc., on which switching on and off of the on-off control means 80, and charging state or charging amount of the portable charger 70 by the capacitor portion 57 are indicated. A user of the portable charger 70 separates a connecting terminal 56 from the jack (terminal) 55 according to the indicator 65.

As the battery 53 installed in the fixed box B, a large battery having large capacity can be used. And, it is preferable to make the battery 53 always stand-by in full-charge state by float charging of the power source portion 51 and the control portion 52.

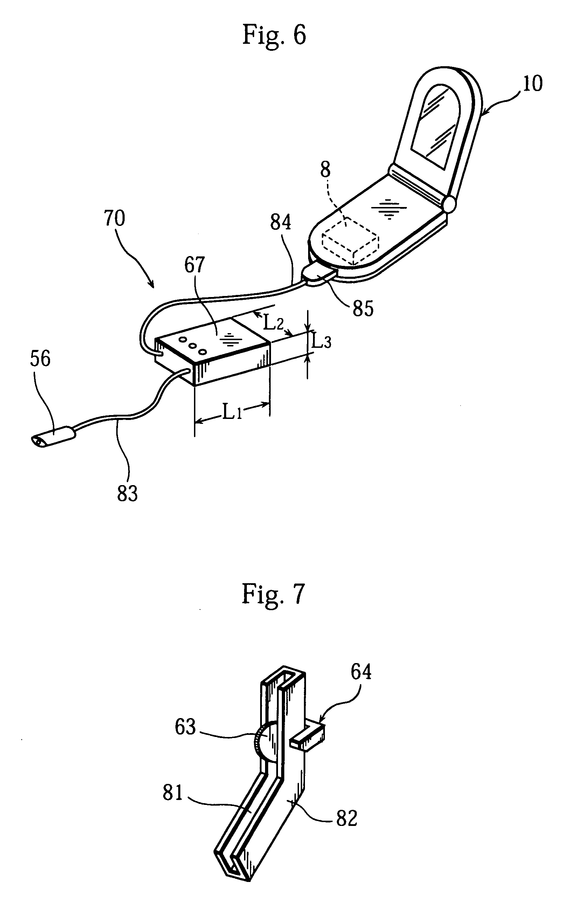

Figure 7 shows a coin passage 81 (in the box B) continuing downward from the coin slot 62 shown in Figure 5. The coin passage 81 is formed with a chute guiding member 82, and the above-mentioned sensor switch 64 is U-shaped and disposed as to hold the chute guiding member 82.

The portable charger 70 has a (thin) flat-box case 67 which has dimensions of, for example, a longitudinal side L₁ of f 10 to 15cm, a lateral side L₂ of 8 to 10 cm, and a thickness L₃ of 0.5 to 3 cm as to have a magnitude (size) easily stored in handbags, pockets, and bags to carry. Two thin cords 83 and 84 are protruding from the (portable) case 67. The (input) terminal 56, detachably connected to the terminal 55, is disposed on an end of the cord 83, and a terminal (for output) 85 is disposed on an end of the cord 84.

The portable charger 70 is provided with the capacitor portion 57 composed of plural electric double-layer capacitors (condensers) 58 to accumulate electric energy supplied by the public charger 66 in connected state of the terminal 55 and the terminal 56, and a constant power output portion 60.

And, the constant voltage output portion 60 of the portable charger 70 is detachably connected to the battery 8 of the mobile phone 10 to charge. Concretely, the output terminal 85 is connected to a connecting terminal portion 86 of the mobile phone 10.

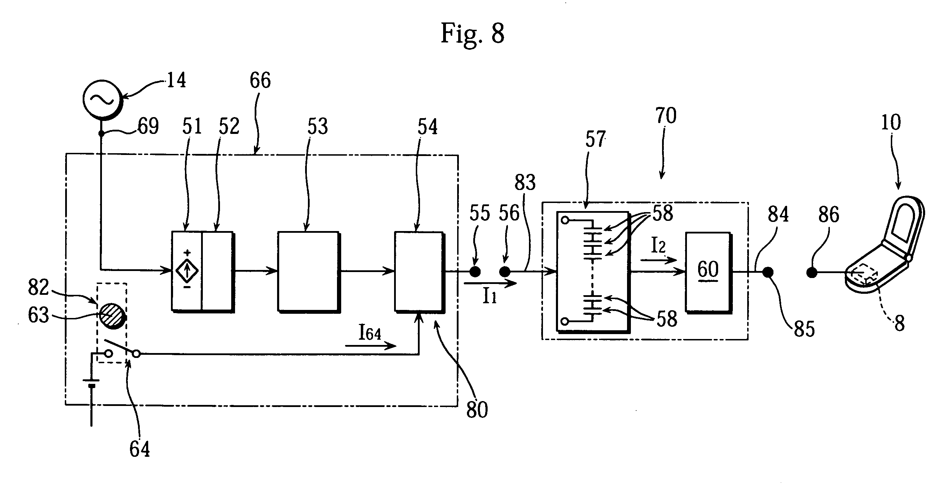

As shown in Figure 3 and Figure 8, the capacitor portion 57 of the portable charger 70 is composed of the plural electric double-layer capacitors 58 serially-connected to accumulate the electric energy from the public charger 66. The serially-connected electric double-layer capacitors 58 have electrostatic capacity C₁, C₂, ..., Cₙ , and V₁, V₂, ..., Vₙ indicate terminal voltage respectively. E is the supplied voltage of the capacitor portion 57 which corresponds to V₁ + V₂ + V₃ + ... + Vₙ (namely, the total voltage).

In Figure 8, when the current running from the public charger 66 to the capacitor portion 57 of the portable charger 70 with the terminal 56 connected to the terminal 55 is shown as l₁, and the current running from the capacitor portion 57 to the constant voltage output portion 60 to charge the battery 8 of the mobile phone 10 in connected state of the terminal 85 and the connecting terminal portion 86 is shown as l₂ , l₁ and l₂ are set to be l₁ >> l₂ . That is to say, 5 ≦ l₁ / l₂ ≦ 200. For example, when l₁ = 40A and l₂ = 0.5A, l₁ / l₂ = 80. When l₁ = 100A and l₂ = 0.5A, l₁ / l₂ = 200. Time t₁ required to charge the serially-connected electric double-layer capacitors 58 by the capacitor portion 57 of large capacity is approximately 10 to 40 seconds. Many portable chargers 70 are efficiently charged in turn in convenience stores and public spaces. After the charge, the mobile phone 10 can be conveniently charged for sufficient time (generally 60 to 90 minutes) by the fully-charged portable charger 70 while it is carried (taken around). In other words, the portable charger 70 is restricted to the installation site of the public charger 66 in convenience stores and public spaces only for a short period of time, and taken around (carried) immediately after the boosting charge (of 10 to 40 seconds) keeping the mobile phone operational.

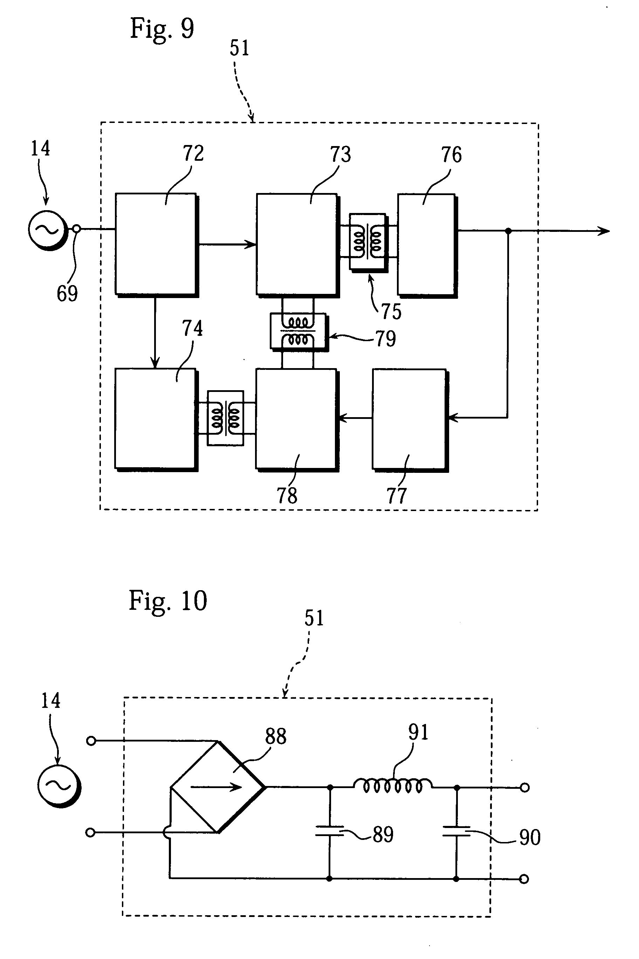

Next, for the power source portion 51, a circuit diagram shown in Figure 9, 10, or 11 can be applied.

In Figure 9, the power source portion 51 is provided with a rectifier circuit 72 supplied with electric power by the commercial power source 14, a switching portion 73 and an auxiliary power source 74 supplied with electric energy by the rectifier circuit 72, and a high-frequency rectifier circuit 76 supplied with electric energy by the switching portion 73 through an output transformer 75. Further, the power source portion 51 is provided with a constant voltage control portion 77 and a PWM control portion 78 to detect the voltage of the electric energy supplied to the control portion 52 and the battery 53 (refer to Figure 8) by the high-frequency rectifier circuit 76 to make constant voltage, and a driving transformer 79 to transmit control signals from the PWM control portion 78 to the switching portion 73.

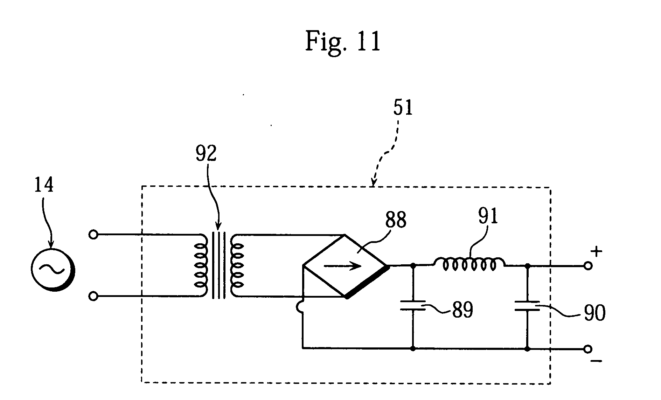

And, the power source portion 51 shown in Figure 10 is composed of a rectifier 88 supplied with electric power from the commercial power source 14, smoothing capacitors 89 and 90, and a choke coil 91. In Figure 11, the power source portion 51 is constructed as that electric power from the commercial power source 14 is supplied to a step-down transformer 92, then, sent to the rectifier 88, the smoothing capacitors 89 and 90, and the choke coil 91.

A charging method for the mobile phone 10 with the charging apparatus (system) as described above is described. The box-shaped public charger 66 is installed in convenience stores, hotels, stations, or other public spaces, connected to the commercial power source 14 to charge the battery 53 by float charging, and made stand-by in full-charged state. Many (units of) portable chargers 70 are preliminarily sold to many users. When charging is needed, the user connects the terminal 56 of the portable charger 70 to the jack (terminal) 55 of the public charger 66 installed in convenience stores or public spaces and feeds a coin 63 to the coin slot 62 of the public charger 66. The sensor switch 64 detects the feeding of the coin 63, and boosting charge is conducted by the constant power control portion 54 with the current I₁ according to the detecting signal I₆₄. The boosting charge is completed within 1 to 2 minutes utmost. The charging time is preferably 10 to 40 seconds, and more desirably 13 to 20 seconds. The completion of the charge is checked by the charging-state indicator 65.

Then, the portable charger 70 is separated from the public charger 66. The portable charger 70 can be carried (moved) immediately after the separation, stored in a handbag, a pocket, or a bag, and connected to the mobile phone 10 to charge while it is moved.

A lithium-ion battery or a nickel-cadmium battery is used as the battery 8 of the mobile phone 10. Although it generally takes 60 to 90 minutes to reach full-charge for the characteristics of the battery 8, charging can be easily conducted with the small portable charger 70 while the user is moving (out). Therefore, inconvenience that the mobile phone is restricted to the installation site of the stationary public charger 66 is not caused.

According to the charger for mobile phone of the present invention, boosting charge is conducted as long as the electric double-layer capacitors 4 are not damaged. Therefore, restriction time for the charger is short. Further, the charger is easily made compact to take around in a bag or a pocket for charging the mobile phone 10 anytime when charging is needed in outing. And, the charger can sufficiently charge for a long time because the output portion 6 supply the power to the battery 8 with constant voltage.

The charging site is not restricted to the installation site of the commercial power source 14 and charging can be conveniently conducted in outing by a motorcar because the charger can be charged not only by the commercial power source 14 but also by the car battery 13.

The plural electric double-layer capacitors 4 can accumulate sufficient electric energy needed for charging the battery 8 of the mobile phone 10.

Waiting time in hasty preparation of outing is reduced because the charging of the charger can be rapidly (within a range of 30 seconds to 2 minutes) charged. Further, a remarkable charging method, in which the battery 8 of the mobile phone 10 can be charged for a long time in a handbag or a pocket during the outing, can be used.

The control circuit is made simple to be offered with a low price, and utility of the charger is very high because durability of the electric double-layer capacitor 4 can be sufficiently improved.

Further, boosting charge can be conducted (without a complicated control) for high utility.

According to the operation method of the charger for mobile phone of the present invention, the mobile phone 10 is used much more conveniently than conventional mobile phones because the user can go out immediately after the charging of the charger 30 in hasty preparation, and the mobile phone 10 is slowly charged for sufficient time in outing.

According to the charging apparatus for mobile phone of the present invention, many portable chargers 70 can be charged in turn within a short period of time by one unit of the stationary public charger 66. Therefore, restriction time to the site of the stationary public charger 66 is short, and the user can move immediately after the charging of the portable charger 70. Further, the portable charger 70 is easily made compact to be carried, and the mobile phone 10 is charged anytime needed in outing by the charged portable charger 70 carried with the mobile phone 10. And, the mobile phone 10 is sufficiently charged for a long time because the constant voltage output portion 60 supplies constant voltage for charging the battery 8 of the mobile phone 10.

The public charger 66, installed (fixed) in a place convenient for general users for usefulness, automatically starts to supply electric energy to the portable charger 70 when the coin is fed.

Even if the public charger 66 is heavy, no problem is caused because the public charger 66 is stationary. Therefore, the portable charger 70 can be sufficiently made light-weight and compact.

The serially-connected electric double-layer capacitors 58 are effective to make the portable charger 70 light-weight and compact, and able to accumulate sufficient electric energy needed for charging the battery 8 of the mobile phone 10.

Further, the stationary public charger 66, where the user is restricted, can charge rapidly enough. In the charging of the mobile phone 10 (charged in handbags and pockets when the user is out) in which the user is not restricted, charging is slowly conducted as to be appropriate for the battery 8 (composed of a lithium-ion battery or a nickel-cadmium battery). This is rational and remarkably useful.

According to the charging method of the charging apparatus for mobile phone of the present invention, inconvenience of conventional charging methods is solved because the portable charger 70 is once charged in convenience stores, etc. when the user desires to charge quickly, then, while the user is out, the battery 8 of the mobile phone 10 is slowly charged for a long time.

## Claims

1. A charger for mobile phone comprising:
a power input portion (12);
a switching power source portion (1) supplied with electric power by the power input portion (12);
a control portion (2) having a micro-computer logic circuit (25) supplied with electric energy by the switching power source portion (1);
a capacitor portion (3) having plural electric double-layer capacitors (4) to accumulate the electric energy supplied by the control portion (2);
a feedback circuit (5) to transmit charging state of the electric double-layer capacitors (4) to the control portion (2); and
an output portion (6) to supply the electric energy accumulated in the electric double-layer capacitors (4) to a battery (8) of a mobile phone (10) with constant voltage ; wherein:
charge and discharge of the electric double-layer capacitors (4) and supplied voltage (E) are controlled by the control portion (2) as to correspond to the charging state of the electric double-layer capacitors (4) transmitted by the feedback circuit (5).

2. The charger for mobile phone as set forth in claim 1, wherein the power input portion (12) is alternatively connected to a commercial power source (14) and a car battery (13).

3. The charger for mobile phone as set forth in claim 1 or claim 2, wherein the plural electric double-layer capacitors (4) are serially connected.

4. The charger for mobile phone as set forth in claim 1 or claim 2, wherein the control portion (2) controls as that current (l₁) to charge the electric double-layer capacitors (4) and current (l₂) running from the electric double-layer capacitors (4) to the output portion (6) to charge the battery (8) of the mobile phone (10) are set to be l₁ >> l₂.

5. The charger for mobile phone as set forth in claim 4, wherein 5 ≦ l₁ / l₂ ≦ 50.

6. The charger for mobile phone as set forth in claim 1 or claim 2, wherein the plural electric double-layer capacitors (4) are serially connected, each terminal voltage (v₁)(v₂)(v₃) of the electric double-layer capacitors (4) is detected and transmitted to the control portion (2) through the feedback circuit (5), total voltage value is calculated by program control of the micro-computer logic circuit (25) of the control portion (2) as the terminal voltage (v₁)(v₂)(v₃) is within an operational range, and the total voltage value is supplied to the plural electric double-layer capacitors (4) as supplied voltage (E).

7. The charger for mobile phone as set forth in claim 1 or claim 2, wherein the plural electric double-layer capacitors (4) are serially connected, and the switching power source portion (1) is controlled by program control of the micro-computer logic circuit (25) of the control portion (2) as that current of the maximum power (l₁) of the switching power source portion (1) is supplied to the electric double-layer capacitors (4) with detecting and transmitting each terminal voltage (v₁)(V₂)(V₃) of the electric double-layer capacitors (4) to the control portion (2) through the feedback circuit (5).

8. An operation method of charger for mobile phone comprising the steps of:
connecting a capacitor portion (3) having plural electric double-layer capacitors (4), a power input portion (12) of a charger (30) having the power input portion (12) and an output portion (6) to a commercial power source (14) or a car battery (13) for boosting charge;
separating the power input portion (12) for carrying the charger (30); and
connecting the output portion (6) of the charger (30) to a battery (8) of a mobile phone (10) to charge for a period of time 5 to 50 times longer than that of the boosting charge.

9. A charging apparatus for mobile phone comprising a stationary public charger (66) connected to a commercial power source (14), and plural portable chargers (70), each of which has a capacitor portion (57) composed of electric double-layer capacitors (58) to accumulate electric energy supplied by the public charger (66) in connected state, and a constant voltage output portion (60) detachably connected to a battery (8) of a mobile phone (10) to charge, detachably connected to the public charger (66).

10. The charging apparatus for mobile phone as set forth in claim 9. wherein the stationary public charger (66) is a box-shaped charger installed in convenience stores, hotels, stations, and public spaces, and, having a coin slot (62), a sensor switch (64) to detect feeding of a coin (63) to the coin slot (62), and an on-off control means (80) to control as electric energy is supplied to the capacitor portion (57) of the portable charger (70) in connected state by detection work of the sensor switch (64).

11. The charging apparatus for mobile phone as set forth in claim 9 or claim 10, wherein the stationary public charger (66) is provided with a power source portion (51) to rectify and decrease AC power from the commercial power source (14), a battery (53) to accumulate DC power from the power source portion (51), a constant power control portion (54) to control as constant power is supplied to the portable charger (70) in connected state, and a terminal (55) to which the portable charger (70) is detachably connected.

12. The charging apparatus for mobile phone as set forth in claim 9 or claim 10, wherein the capacitor portion (57) of the portable charger (70) is composed of a serial connection of the electric double-layer capacitors (58) to accumulate electric energy supplied by the public charger (66).

13. The charging apparatus for mobile phone as set forth in claim 9 or claim 10, wherein current (l₁) running from the public charger (66) to the capacitor portion (57) of the portable charger (70) to charge and current (l₂) running from the capacitor portion (57) to the constant voltage output portion (60) to charge the battery (8) of the mobile phone (10) are set to be l₁ >> l₂.

14. The charger for mobile phone as set forth in claim 13, wherein 5 ≦ l₁ / l₂ ≦ 5 200.

15. A charging method for mobile phone comprising the steps of:
installing a box-shaped public charger (66) in convenience stores, hotels, stations, and public spaces;
connecting a portable charger (70) having electric double-layer capacitors (4) to the public charger (66) and feeding a coin (63) to the public charger (66) for boosting charge;
separating the portable charger (70) from the public charger (66) for carrying; and
connecting the portable charger (70) to a mobile phone (10) to charge while the mobile phone (10) is being carried.
